# EUROPÄISCHE PATENTSCHRIFT

(11) **EP 2 817 228 B1**
(45) Veröffentlichungstag und Bekanntmachung des Hinweises auf die Patenterteilung: **07.12.2016**
(21) Anmeldenummer: 13705180.1
(22) Anmeldetag: 20.02.2013
(51) Int. Cl.: B65B 43/30, B65B 43/46, B65B 43/18, B25J 11/00, B25J 15/06, B65B 1/06

(54) **VORRICHTUNG UND VERFAHREN FÜR DIE SCHÜTTGUTABSACKUNG IN EIN GEBINDE**
DEVICE AND METHOD FOR BAGGING BULK GOODS IN A CONTAINER
DISPOSITIF ET PROCÉDÉ D'ENSACHAGE DE PRODUITS EN VRAC DANS UNE GERBE

(30) Priorität: 20.02.2012 EP 12156220
(43) Veröffentlichungstag der Anmeldung: 31.12.2014
(73) Patentinhaber: Bühler AG, 9240 Uzwil (CH)
(72) Erfinder: VAUCHER, Christophe, CH-9244 Niederuzwil (CH); HAID, René, CH-9242 Oberuzwil (CH); KLEINER, Andreas, CH-9527 Niederhelfenschwil (CH)
(74) Vertreter: Hepp Wenger Ryffel AG
(86) Internationale Anmeldenummer: PCT/EP2013/053383
(87) Internationale Veröffentlichungsnummer: WO 2013/124319

(56) Entgegenhaltungen:
- EP-A1- 0 016 691
- EP-A1- 0 176 477
- EP-A1- 0 371 955
- EP-A1- 1 645 512
- EP-A1- 2 014 558
- EP-A1- 2 208 678
- EP-A1- 2 246 264
- WO-A1-99/14127
- WO-A1-03/089349
- US-A- 3 830 266
- US-A1- 2004 055 250

## Beschreibung

Die Erfindung betrifft eine Vorrichtung und ein Verfahren für die Schüttgutabsackung in ein Gebinde gemäss dem Oberbegriff der unabhängigen Ansprüche.

Aus der EP 0 371 955 A1 ist eine Einrichtung zur Entnahme von Säcken aus einem Magazin und Zufuhr zu einer Verarbeitungsposition bekannt, bei der einer Entnahmeeinrichtung ein an mindestens einer Längsseite eines Sackes zur Anlage bringbarer und quer zur Transportrichtung der Säcke beweglicher Anschlag nachgeordnet ist, der mit einem parallel zur Tannsportrichtung des Sackes verlaufenden weiteren Anschlag zusammenwirkt, an den der Sack zur Anlage bringbar ist.

Aus der WO 2010/052325 A1 sind Vorrichtungen zum Absacken von Schüttgut wie beispielsweise Mehl in ein Gebinde aus Kunststoff bekannt. Die offenbarte Vorrichtung betrifft ein Absack-Karussell, wie diese heute dem Fachmann bekannt sind.

Aus der WO 92/12900 A1 ist ein Verfahren und eine Vorrichtung zur automatischen Sackbereitstellung und Sackanhängung von einem Stapel Säcke bekannt. Die Säcke werden mittels zwei Haftklauenpaaren mit Saugnäpfen zum Teil geöffnet, wobei die Haftklauenpaare an einem Schwenkarm angebracht sind zur geöffneten Überführung eines Sackes von der Sackbereitstellung an den Absackstutzen. Die Sacköffnungsklauen werden über ein hydraulisches oder pneumatisches Hebelgelenk in vordefinierte Positionen positioniert. Zur zuverlässigen Bereitstellung der Säcke wird die Verwendung einer Mehrzahl becherförmiger Sackmagazine vorgeschlagen.

Diese vorbekannte Lösung der Sackbereitstellung und Sacköffnung weist den Nachteil auf, dass die Sackbereitstellung in Magazinen zumindest bei flexiblen Säcken eine gewisse Sorgfalt verlangt, was aufwendig und daher im Betrieb nicht kostengünstig ist. Zudem weist die vorbekannte Vorrichtung den Nachteil auf, dass bei der Sacköffnung mittels der pneumatisch öffenbaren Haftklauenpaare in vorbestimmte Positionen der Sack leicht abfallen kann, was im Betrieb zu weiterem Mehraufwand für den Bediener führt, was den Durchsatz durch die Vorrichtung zur Schüttgutabsackung verringert und daher nicht kosteneffizient ist.

Es ist daher eine Aufgabe der vorliegenden Erfindung, die Nachteile des Bekannten zu vermeiden, insbesondere also eine Vorrichtung und ein Verfahren bereitzustellen, mit denen die Anforderungen an die Positioniergenauigkeit des Gebindes bei der Bereitstellung verringert werden für ein zuverlässigeres Verschliessen des Gebindes nach der Absackung und optional die Zuverlässigkeit des Greifens des Gebindes erhöht wird.

Diese Aufgaben werden durch eine Vorrichtung sowie ein Verfahren gemäss den unabhängigen Ansprüchen gelöst.

Die erfindungsgemässe Vorrichtung für die Schüttgutabsackung in ein Gebinde umfasst eine Bereitstellungseinrichtung für das Gebinde. Das Gebinde weist eine Einfüllseite mit einer in dieser angeordneten Einfüllöffnung auf. Die Vorrichtung umfasst weiter eine Greifeinrichtung zum Greifen des im Wesentlichen geschlossenen und leeren Gebindes von der Bereitstellungseinrichtung. Optional umfasst die Vorrichtung eine Transporteinrichtung zum Transport des Gebindes zu einer Absackeinrichtung. Weiter insbesondere umfasst die Vorrichtung eine Gebindeöffnungseinrichtung zur Öffnung des Gebindes. Die Vorrichtung weist eine als Distanzmesseinrichtung ausgebildete Detektionseinrichtung zur Detektion der Position des Gebindes auf und/oder in der Bereitstellungseinrichtung auf. Insbesondere ist die Detektionseinrichtung an der Greifeinrichtung angeordnet. Weiter weist die Vorrichtung eine Positioniereinrichtung zur Positionierung des Gebindes in Abhängigkeit von einer durch die Detektionseinrichtung gemessenen Distanz auf. Insbesondere ist die Positionierung eine Ausrichtung des Gebindes.

Unter dem Begriff "Schüttgut" wird im Sinne der vorliegenden Anmeldung ein Gut verstanden, welches in ein Gebinde absackbar ist. Insbesondere ist Schüttgut ein körniges, mehliges oder auch stückiges Gut, das bevorzugt in einer schüttfähigen Form vorliegt und insbesondere fliessfähig ist. Insbesondere werden als Schüttgut Mehl, Korn, fliessfähige, pulvrige Substanzen und beliebige Kombinationen daraus verstanden.

Unter dem Begriff "Gebinde" wird im Sinne der vorliegenden Anmeldung ein Aufnahmebehälter mit zumindest flexiblen Seitenwänden verstanden. Beispielsweise ist ein Sack ein Gebinde im Sinne der vorliegenden Anmeldung. Das Gebinde weist eine Einfüllöffnung beispielsweise zur Einfüllung von Schüttgut auf. Der Bereich des Gebindes, in dem die Einfüllöffnung angeordnet ist, wird als Einfüllseite bezeichnet. Ein im Wesentlichen geschlossenes und leeres Gebinde ist beispielsweise flachgedrückt, weshalb dieses vorteilhaft vor der Befüllung mit Schüttgut geöffnet werden soll. Derartige im Wesentlichen geschlossene und leere Gebinde sind stapelbar, wobei die Gebinde beispielsweise auf den Seitenwänden liegen und beispielsweise mit einer Vereinzelungseinrichtung vom Stapel auf die Bereitstellungseinrichtung positionierbar sind.

Beispielsweise kann ein Gebinde aus Kunststoff, beispielsweise Polyester, Papier oder beliebigen Kombination daraus hergestellt werden.

Unter einer "Bereitstellungseinrichtung" wird im Sinne der vorliegenden Anmeldung eine Einrichtung verstanden, von der das im Wesentlichen geschlossene und leere Gebinde durch die Greifeinrichtung gegriffen wird. Beispielsweise kann die Bereitstellungseinrichtung als Auflagefläche ausgestaltet sein, auf die durch einen Bediener jeweils ein Gebinde positioniert und anschliessend durch die Greifeinrichtung gegriffen wird. Bevorzugt wird jeweils genau ein Gebinde bereitgestellt. Insbesondere ist die Bereitstellung gleichzeitig von zumindest zwei Gebinden, beispielsweise einem Gebindestapel, möglich.

Unter einer "Transporteinrichtung" wird im Sinne der vorliegenden Anmeldung eine Einrichtung zur Bewegung des gegriffenen Gebindes von der Bereitstellungseinrichtung zu einer Absackeinrichtung verstanden.

Unter einer "Gebindeöffnungseinrichtung" wird im Sinne der vorliegenden Anmeldung eine Einrichtung verstanden, mit der ein im Wesentlichen geschlossenes und leeres Gebinde zur Absackung von Schüttgut in das Gebinde öffenbar ist. Mittels der Gebindeöffnungseinrichtung kann die Einfüllöffnung eines im Wesentlichen geschlossenen und leeren Gebindes auf der Einfüllseite geöffnet werden. Die Einfüllöffnung des Gebindes ist also öffenbar, beispielsweise durch Auseinanderbewegen der gegenüber liegenden flexiblen Seitenwände.

Unter einer "Positioniereinrichtung" wird im Sinne der vorliegenden Anmeldung eine Einrichtung verstanden, mit der Abweichungen von einer Normposition des Gebindes beispielsweise auf der Bereitstellungseinrichtung korrigierbar sind, um ein zuverlässiges Absacken und Verschliessen des Gebindes nach der Absackung zu gewährleisten. Derartige Abweichungen der Position des Gebindes von einer Normposition können beispielsweise durch die Positionierung des Gebindes auf der Bereitstellungseinrichtung durch einen Bediener oder eine Vereinzelungseinrichtung, mit der das Gebinde von einem Gebindestapel auf der Bereitstellungseinrichtung positioniert wird, entstehen. Mittels der Positioniereinrichtung kann also eine Abweichung von einer Normposition auf der Bereitstellungseinrichtung, beim Transport von der Bereitstellungseinrichtung zur Absackeinrichtung oder in der Absackeinrichtung korrigiert werden.

Beispielsweise kann die detektierte Position mittels einer Datenverarbeitungseinrichtung, insbesondere einem Computer, zumindest weitergeleitet und an die Positioniereinrichtung kommuniziert werden, sodass die Positioniereinrichtung aufgrund dieser Daten das Gebinde positionieren kann. Insbesondere wird die detektierte Position in der Datenverarbeitungseinrichtung gespeichert.

Unter einer "Normposition", die insbesondere eine vordefinierbare und / oder vordefinierte Position ist, wird die Position des Gebindes auf der Bereitstellungseinrichtung verstanden, bezüglich der keine Korrektur der Position erforderlich ist.

Die Ausgestaltung einer Vorrichtung für die Schüttgutabsackung in ein Gebinde mit einer Detektionseinrichtung und einer Positioniereinrichtung hat den Vorteil, dass Abweichungen von einer Normposition des Gebindes auf und/oder in der Bereitstellungseinrichtung korrigierbar sind zum zuverlässigen Greifen des Gebindes und auch zum zuverlässigen Absacken von Schüttgut in das Gebinde und anschliessendem Verschliessen. Diese Ausgestaltung erfordert daher eine geringere Positioniergenauigkeit des Gebindes auf und/oder in der Bereitstellungseinrichtung durch einen Bediener. Dies führt zu einem zuverlässigeren, effizienteren und damit kostengünstigeren Verfahren.

Beispielsweise kann das Gebinde mittels der Greifeinrichtung ohne Detektion und Korrektur der Position des Gebindes so gegriffen werden, dass das Schüttgut nicht zuverlässig in der Absackeinrichtung in das Gebinde gefördert wird. Zudem kann dies dazu führen, dass eine Verschliessung des Gebindes nach der Absackung beispielsweise mittels eines auf dem Gebinde angebrachten Klebestreifens nicht zuverlässig erfolgt, da das Gebinde falsch positioniert sein kann.

Bevorzugt wird die Ausrichtung der Einfüllseite des Gebindes, insbesondere die Ausrichtung der Kante, mittels der Detektionseinrichtung detektiert.

Bevorzugt ist die Detektionseinrichtung als optischer Sensor, als Markierungsdetektor oder als Berührungsmesseinrichtung oder beliebige Kombinationen daraus ausgebildet. Insbesondere ist die Distanzmesseinrichtung als Ultraschallsensor ausgebildet.

Die Verwendung einer Distanzmesseinrichtung hat den Vorteil, dass diese kostengünstig und im Betrieb zuverlässig ist bei Verwendung verschiedener Materialien. Eine Distanzmessung mittels einer Distanzmesseinrichtung wie beispielsweise einem Ultraschallsensor ist dem Fachmann bekannt.

Beispielsweise kann die Position des Gebindes mittels zwei an der Greifeinrichtung voneinander beabstandet angeordneten Distanzmesseinrichtungen bestimmt werden; wenn die Greifeinrichtung zum Greifen des Gebindes zum Gebinde bewegt wird, ist die Kante des Gebindes mittels der Distanzmesseinrichtungen detektierbar; mittels der bekannten Information bezüglich der Position der Distanzmesseinrichtungen an der Greifeinrichtung, der zeitabhängigen Position der Greifeineinrichtung und dem jeweiligen Zeitpunkt der Detektion der Kante des Gebindes durch die Distanzmesseinrichtungen kann die Ausrichtung des Gebindes auf der Bereitstellungseinrichtung bestimmt werden.

Die Verwendung eines optischen Sensors wie beispielsweise einer Fotozelle oder einer Kamera hat den Vorteil, dass eine bessere und genauere Detektion der Position des Gebindes möglich ist. Mittels des optischen Sensors kann beispielsweise die Ausrichtung der Einfüllseite des Gebindes, insbesondere die Ausrichtung der Kante, detektiert werden.

Ein optischer Sensor wie beispielsweise eine Kamera kann insbesondere in der Vorrichtung relativ zur Bereitstellungseinrichtung so positioniert werden, dass die Position des Gebindes detektierbar ist; die Detektion der Position des Gebindes kann mit dem Fachmann bekannten Bildverarbeitungsalgorithmen erfolgen bezüglich den mit der Kamera aufgenommenen Bildern; in der vorliegenden Anordnung ist die Kamera bevorzugt in der Vorrichtung getrennt von der Greifeineinrichtung angeordnet.

Die Verwendung einer Berührungsmesseinrichtung zur Detektion der Position, mittels der beispielsweise die Ausrichtung der Einfüllseite des Gebindes, insbesondere die Ausrichtung der Kante, detektiert werden kann, hat den Vorteil, dass diese unabhängig vom Material zuverlässig durchführbar ist.

Unter einem "Markierungsdetektor" wird im Sinne der vorliegenden Anmeldung ein Detektor zum detektieren von zumindest einer Markierung auf und / oder in dem Gebinde verstanden.

Die Verwendung eines Markierungsdetektor hat den Vorteil, dass eine am und / oder im Gebinde angeordnete Markierung entsprechend den jeweiligen Anforderungen wie beispielsweise Kosten, Genauigkeit und Zuverlässigkeit auswählbar ist.

Beispielsweise ist es möglich, als Markierung zumindest eine optische Markierung, eine magnetische Markierung oder eine taktile Markierung oder beliebige Kombinationen daraus vorzusehen.

Eine optische, magnetische oder taktile Markierung und der Markierungsdetektor sind vorteilhaft so ausgebildet, dass die Position des Gebindes detektierbar ist und diese Information zur Korrektur der Position des Gebindes mittels der Positioniereinrichtung verwendbar ist.

Besonders bevorzugt ist die Greifeinrichtung derart ausgestaltet, dass das Gebinde, welches auf der Bereitstellungseinrichtung aufliegt, auf einer Auflageseite mittels der Greifeinrichtung greifbar ist. Alternativ oder zusätzlich ist das Gebinde auf einer Oberseite mittels der Greifeinrichtung greifbar.

Unter der "Auflageseite" des Gebindes wird im Sinne der vorliegenden Anmeldung der Bereich der Seitenwand des Gebindes verstanden, der der Bereitstellungseinrichtung zugewandt ist. Der Begriff "Oberseite" des Gebindes umfasst den Bereich der Seitenwand des Gebindes, der der Bereitstellungseinrichtung abgewandt ist. Insbesondere ist die Oberseite gegenüberliegend der Auflageseite.

Die Greifbarkeit des Gebindes mittels der Greifeinrichtung auf einer Auflageseite oder einer Oberseite hat den Vorteil, dass entsprechend den Anforderungen eine einfach ausgestaltete und damit kostengünstige Greifeinrichtung verwendbar ist, da nur eine Seite des Gebindes gegriffen wird.

Die Ausgestaltung der Greifeinrichtung derart, dass das Gebinde auf der Auflageseite und der Oberseite greifbar ist, hat den Vorteil, dass das Greifen des Gebindes zuverlässiger erfolgen kann, wodurch ein zuverlässigerer Betrieb und damit eine höhere Durchsatzleistung erzielbar ist.

Ganz besonders bevorzugt umfasst die Greifeinrichtung eine erste Greifarmeinrichtung zum Greifen der Oberseite. Alternativ oder zusätzlich weist die Greifeinrichtung eine zweite Greifarmeinrichtung zum Greifen der Auflageseite auf.

Die Ausgestaltung der Greifeinrichtung mittels Greifarmeinrichtungen hat den Vorteil, dass hiermit ein Greifen des Gebindes mit einem ausreichenden Abstand von der Einfüllöffnung oder auch Verschlussmitteln wie Klebestreifen oder Nähten des Gebindes möglich ist. Beispielsweise weisen Gebinde häufig Klebestreifen zum Verschliessen des Gebindes nach der Absackung auf, wobei ein Bereich des Gebindes so geformt wird, insbesondere gefaltet wird, dass die Einfüllöffnung verschlossen werden kann. Um ein zuverlässiges Greifen des Gebindes mittels der Greifeinrichtung zu ermöglichen, ist es vorteilhaft, Greifmittel der Greifeinrichtung auf der der Einfüllseite abgewandten Seite der Verschlusseinrichtung zu positionieren, was vorteilhaft mittels Greifarmeinrichtungen ermöglicht wird.

Bevorzugt ist die Detektionseinrichtung als Distanzmesseinrichtung derart ausgebildet, dass eine Distanzmessung zwischen der ersten Greifarmeinrichtung und der zweiten Greifarmeinrichtung durchführbar ist.

Dies hat den Vorteil, dass die Distanzmessung zwischen der ersten Greifarmeinrichtung und der zweiten Greifarmeinrichtung so erfolgt, dass die Distanz zwischen diesen beiden Greifarmeinrichtungen gemessen wird, was zuverlässig einstellbar und kalibrierbar ist. Wenn im Betrieb die erste Greifarmeinrichtung und die zweite Greifarmeinrichtung das Gebinde auf der Oberseite und der Auflageseite greifen, so umgreifen diese beiden Greifarmeinrichtungen das Gebinde so, dass bei entsprechender Anordnung der Distanzmesseinrichtung die gemessene Distanz durch das umgriffene Gebinde verändert wird, was die Detektion der Position des Gebindes ermöglicht, da die Position der Greifarmeinrichtungen in Abhängigkeit von der Zeit bekannt ist.

Besonders bevorzugt ist die Detektionseinrichtung an dem dem Gebinde zugewandten Bereich der ersten Greifarmeinrichtung und/oder der zweiten Greifarmeinrichtung angeordnet. Insbesondere ist die Detektionseinrichtung benachbart zu zumindest einem Greifmittel angeordnet.

Unter einem "Greifmittel" wird im Sinne der vorliegenden Anmeldung eine Einrichtung zum Greifen des Gebindes wie beispielsweise eine Klemme oder auch ein Saugnapf verstanden.

Dies hat den Vorteil, dass die Detektion der Position des Gebindes noch zuverlässiger durchführbar ist, da die Detektionseinrichtung nicht durch die Greifarmeinrichtungen abgedeckt wird.

Ganz besonders bevorzugt weist die Greifeinrichtung zumindest ein pneumatisches Greifmittel auf. Das pneumatische Greifmittel ist insbesondere als zumindest ein Saugnapf ausgebildet.

Die Verwendung eines pneumatischen Greifmittels hat den Vorteil, dass derartige Greifmittel wie beispielsweise Saugnäpfe einen zuverlässigen Betrieb ermöglichen und insbesondere bei der Absackung von Mehl die hygienischen Anforderungen für die Verarbeitung von Lebensmitteln erfüllen.

Bevorzugt ist die Greifeinrichtung derart ausgebildet, dass die Einfüllseite des Gebindes mittels der Positioniereinrichtung in eine definierte Ausrichtung bewegbar ist. Insbesondere ist das Gebinde in eine derartige Ausrichtung bewegbar, dass nach dem Transport des Gebindes mittels der Transporteinrichtung zur Absackeinrichtung und der Öffnung des Gebindes mittels der Gebindeöffnungseinrichtung die Schnittebene durch die Einfüllöffnung im Wesentlichen senkrecht zur mittleren Förderrichtung des Schüttguts in das Gebinde angeordnet ist. Mit anderen Worten ist die Position des Gebindes mittels der Positioniereinrichtung so korrigierbar, dass während des Transports und der Öffnung des Gebindes keine weiteren Korrekturen der Position notwendig sind.

Dies hat den Vorteil, dass das Gebinde entsprechend den jeweiligen Anforderungen, welche beispielsweise in einer zentralen Recheneinheit ablegbar sind, für den jeweiligen Verwendungszweck positioniert werden kann. Diese Ausrichtung des Gebindes, dass die Schnittebene durch die Einfüllöffnung im Wesentlichen senkrecht zur mittleren Förderrichtung des Schüttguts durch die Einfüllöffnung nach Transport und Öffnung des Gebindes liegt, hat den Vorteil, dass die Transporteinrichtung und/oder die Gebindeöffnungseinrichtung einfacher konstruiert werden können ohne weitere Positioniereinrichtungen, was die Vorrichtung zuverlässiger und kostengünstiger macht.

Besonders bevorzugt ist die Ausrichtung des Gebindes auf und/oder in der Bereitstellungseinrichtung mittels der Greifeinrichtung durchführbar vor dem Transport des Gebindes mittels der Transporteinrichtung. Insbesondere umfasst die Greifeinrichtung die Positioniereinrichtung.

Dies hat den Vorteil, dass dadurch der Transport von der Bereitstellungseinrichtung zur Absackeinrichtung zuverlässiger wird, weil beispielsweise eine Kollision eines ungenau positionierten Gebindes mit Teilen der Vorrichtung vermieden werden kann, bei der das Gebinde möglicherweise von der Greifeinrichtung abgelöst wird.

Ganz besonders bevorzugt umfasst die erste Greifarmeinrichtung zumindest zwei erste Greifarme. Alternativ oder zusätzlich umfasst die zweite Greifarmeinrichtung zumindest zwei zweite Greifarme. Die zwei ersten Greifarme und/oder die zwei zweiten Greifarme sind im Wesentlichen relativ zueinander positionierbar zur Ausrichtung des Gebindes. Insbesondere sind an den zwei ersten Greifarmen und/oder an den zwei zweiten Greifarmen Greifmittel angeordnet, die relativ zueinander positionierbar sind, bevorzugt in Abhängigkeit von der detektierten Position.

Insbesondere sind jeweils die zwei ersten Greifarme und/oder die zwei zweiten Greifarme parallel zueinander angeordnet und im Wesentlichen parallel zueinander verschiebbar; hierdurch ist eine rotative Positionierung des Gebindes möglich zur Ausrichtung in der Bereitstellungseinrichtung.

Insbesondere ist an den zwei ersten Greifarmen und/oder an den zwei zweiten Greifarmen eine Detektionseinrichtung angeordnet. Die Anordnung von zwei Detektionseinrichtungen an den zwei ersten Greifarmen und/oder zwei zweiten Greifarmen hat den Vorteil der konstruktiv einfachen Ausgestaltung der Detektionseinrichtungen für die Detektion der Position des Gebindes mittels der voneinander beabstandeten Detektionseinrichtungen, was im Betrieb zuverlässig ist.

Bevorzugt ist die Detektionseinrichtung jeweils als Distanzmesseinrichtung, insbesondere als akustischer Sensor und bevorzugt als Ultraschallsensor, oder als optischer Sensor ausgebildet; mittels der bekannten Information bezüglich der Position der Detektionseinrichtung an der Greifeinrichtung, der zeitabhängigen Position der Greifeineinrichtung und dem jeweiligen Zeitpunkt der Detektion der Kante des Gebindes durch die Detektionseinrichtung kann die Position des Gebindes auf der Bereitstellungseinrichtung bestimmt werden.

Die Ausgestaltung der Greifarmeinrichtungen mit jeweils zwei Greifarmen und entsprechenden Detektionseinrichtungen hat den Vorteil, dass damit eine konstruktiv einfache Greifeinrichtung und eine im Betrieb zuverlässige Ausrichtung des Gebindes ermöglicht wird.

Bevorzugt sind die zwei ersten Greifarme und die zwei zweiten Greifarme im Wesentlichen zeitgleich miteinander positionierbar. Insbesondere greift einer der ersten Greifarme das Gebinde auf der Oberseite und einer der zweiten Greifarme das Gebinde auf der Auflageseite, insbesondere an im Wesentlichen gegenüberliegenden Positionen. Weiter insbesondere greift der zweite der ersten Greifarme und der zweite der zweiten Greifarme das Gebinde an der Oberseite und der Auflageseite im Wesentlichen an gegenüberliegenden Positionen.

Dies hat den Vorteil, dass die Positionierung im Betrieb zuverlässiger und die Wahrscheinlichkeit verringert wird, dass das Gebinde von der Greifeinrichtung abgelöst wird.

Besonders bevorzugt weist die Bereitstellungseinrichtung zumindest eine Ausnehmung auf, derart, dass das Gebinde auf der Auflageseite mittels der Greifeinrichtung greifbar ist.

Insbesondere umfasst die Bereitstellungseinrichtung zumindest zwei Schienen und bevorzugt zumindest drei Schienen, die voneinander beabstandet sind, derart, dass die Greifeinrichtung zwischen den Schienen eingreifen kann.

Dies hat den Vorteil, dass die Auflageseite des Gebindes durch die Greifeinrichtung zuverlässig erreichbar und greifbar ist.

Ganz besonders bevorzugt ist die Greifeinrichtung mittels einer Schwenkbewegung und insbesondere einer Translationsbewegung der Transporteinrichtung in der Absackeinrichtung positionierbar.

Dies hat den Vorteil, dass ein einfach aufgebauter und zuverlässig funktionierender Mechanismus ermöglicht wird, um die Greifeinrichtung und damit das Gebinde in der Absackeinrichtung zu positionieren, insbesondere stromabwärts eines Einfüllstutzens der Absackeinrichtung.

Bevorzugt ist mindestens ein Öffnungsparameter der Gebindeöffnungseinrichtung zur Öffnung des Gebindes steuerbar und/oder regelbar. Öffnungsparameter sind insbesondere eine Öffnungszeit, eine Öffnungsgeschwindigkeit oder eine Öffnungsbeschleunigung oder beliebige Kombinationen daraus.

Dies hat den Vorteil, dass durch die Steuerung und/oder Regelung der Öffnung des Gebindes der Betrieb der Vorrichtung zuverlässiger wird, da die Wahrscheinlichkeit einer Ablösung des Gebindes von der Greifeinrichtung minimiert wird im Gegensatz zum Stand der Technik. Im Stand der Technik erfolgt die Öffnung häufig dadurch, dass die Gebindeöffnungseinrichtung zwischen einer Offenposition und einer Geschlossenposition mittels einer Pneumatik hin- und hergeschaltet wird, wodurch beispielsweise Schläge entstehen können. Diese Schläge werden vorteilhaft mit der Steuerung und/oder Regelung der Öffnung verhindert und damit der Betrieb zuverlässiger.

Bevorzugt weist die Greifeinrichtung eine erste Greifarmeinrichtung zum Greifen einer Oberseite des Gebindes und eine zweite Greifarmeinrichtung zum Greifen einer Auflageseite des Gebindes auf. Die erste Greifarmeinrichtung und die zweite Greifarmeinrichtung sind mittels der Gebindeöffnungseinrichtung relativ zueinander positionierbar zur Öffnung des Gebindes. Insbesondere wird das Gebinde mittels der Greifeinrichtung an gegenüberliegenden Positionen auf der Oberseite und der Auflageseite gegriffen. Insbesondere kann die Öffnung des Gebindes bei einer relativen Positionierung der ersten Greifarmeinrichtung und der zweiten Greifarmeinrichtung im Wesentlichen parallel zu einer Schnittebene durch die Einfüllöffnung des Gebindes erfolgen.

Die Öffnung des Gebindes mittels der Greifeinrichtung hat den Vorteil der konstruktiv einfachen Ausgestaltung der Gebindeöffnungseinrichtung und des zuverlässigen Betriebs.

Besonders bevorzugt weist die Gebindeöffnungseinrichtung eine Vorspanneinrichtung zur Vorspannung der ersten Greifarmeinrichtung und der zweiten Greifarmeinrichtung zueinander und/oder gegeneinander auf. Weiter weist die Vorrichtung einen Antrieb auf zur Öffnung des Gebindes. Insbesondere ist der Antrieb als Elektroantrieb, als pneumatischer Antrieb oder hydraulischer Antrieb ausgebildet.

Unter einer "Vorspanneinrichtung" wird im Sinne der vorliegenden Anmeldung ein Vorspannen der beiden Greifarmeinrichtungen zueinander oder gegeneinander verstanden.

Unter dem Begriff einer Vorspannung "zueinander" wird im Sinne der vorliegenden Anmeldung eine Kraftausübung derart verstanden, dass die erste Greifarmeinrichtung und die zweite Greifarmeinrichtung aufeinander zu bewegt werden. Unter dem Begriff einer Vorspannung "gegeneinander" wird im Sinne der vorliegenden Anmeldung eine Kraftausübung derart verstanden, dass die erste Greifarmeinrichtung und die zweite Greifarmeinrichtung voneinander weg bewegt werden.

Die Ausgestaltung der Gebindeöffnungseinrichtung mit einer Vorspanneinrichtung, bei der die Vorspannung durch einen Antrieb überwunden oder ausgenutzt wird zur Öffnung des Gebindes, hat den Vorteil, dass abrupte Bewegungen der Gebindeöffnungseinrichtung im Wesentlichen vermeidbar sind, sodass der Betrieb zuverlässiger ist. Zudem ist eine derartige Ausgestaltung konstruktiv einfach herstellbar, was kostengünstig ist.

Beispielsweise können die erste Greifarmeinrichtung und die zweite Greifarmeinrichtung mittels der die pneumatische Vorspanneinrichtung umfassenden Gebindeöffnungseinrichtung auseinandergedrückt werden, d. h. gegeneinander vorgespannt werden; ein relatives Positionieren der ersten Greifarmeineinrichtung und der zweiten Greifarmeinrichtung voneinander weg wird durch einen positionierbaren Anschlag verhindert; mittels des Antriebs kann dieser Anschlag positioniert werden, wodurch eine steuerbare und/oder regelbare Öffnung des Gebindes erreichbar ist; bei dieser Ausgestaltung ist vorteilhaft nur ein schwacher Antrieb notwendig, was kostengünstig ist, da die pneumatische Vorspanneinrichtung die Öffnungsbewegung unterstützt; für eine Schliessung der Gebindeöffnungseinrichtung ist die Vorspannung insbesondere abschaltbar.

Ganz besonders bevorzugt ist die Greifeinrichtung derart ausgestaltet, dass das Gebinde, welches auf der Bereitstellungseinrichtung aufliegt, auf einer Auflageseite und/oder einer Oberseite mittels der Greifeinrichtung greifbar ist.

Bevorzugt weist die Greifeinrichtung zumindest ein pneumatisches Greifmittel und insbesondere zumindest einen Saugnapf auf.

Besonders bevorzugt weist die Bereitstellungseinrichtung Ausnehmungen auf, derart, dass das Gebinde auf der Auflageseite mittels der Greifeinrichtung greifbar ist.

Ganz besonders bevorzugt ist die Greifeinrichtung mittels einer Schwenkbewegung und insbesondere einer Translationsbewegung der Transporteinrichtung in der Absackeinrichtung positionierbar.

Diese vorstehend erläuterten Ausgestaltungen weisen die früher bereits erläuterten Vorteile auf.

Bevorzugt ist die Öffnungsbeschleunigung mittels einer Steuer- und/oder Regeleinrichtung derart steuerbar und/oder regelbar, das zur Öffnung des Gebindes die Öffnungsbeschleunigung in einem ersten Zeitabschnitt der Öffnungsbewegung auf eine erste Öffnungsbeschleunigung kleiner als eine zweite Öffnungsbeschleunigung in einem zeitlich insbesondere direkt folgenden zweiten Zeitabschnitt der Öffnungsbewegung einstellbar ist.

Dies hat den Vorteil, dass durch die Einstellbarkeit der Öffnungsbeschleunigung am Beginn der Öffnungsbewegung kleiner als in einem zeitlich späteren Abschnitt der Öffnungsbewegung die Wahrscheinlichkeit der Ablösung des Gebindes von der Greifeinrichtung verringert wird. Die Auswahl der zeitlichen Abschnitte zeitlich direkt nacheinander hat den Vorteil, dass die Öffnungszeit minimiert werden kann für einen möglichst hohen Durchsatz durch die Vorrichtung.

Bevorzugt ist die Öffnungsgeschwindigkeit oder die Öffnungsbeschleunigung der Gebindeöffnungseinrichtung in Abhängigkeit von der Haltekraft, mit der das Gebinde mittels der Greifeinrichtung gehalten wird, steuerbar und/oder regelbar. Insbesondere ist die Haltekraft bestimmbar. Die Greifeinrichtung ist bevorzugt als pneumatisches Greifmittel, insbesondere als zumindest ein Saugnapf, ausgebildet.

Die Steuerung oder Regelung der Öffnungsgeschwindigkeit bzw. die Steuerung oder Regelung der Öffnungsbeschleunigung der Gebindeöffnungseinrichtung in Abhängigkeit von der Haltekraft hat den Vorteil, dass die Wahrscheinlichkeit der Ablösung des Gebindes von der Greifeinrichtung minimiert werden kann; beispielsweise kann eine Steuerung in Abhängigkeit von dem verwendeten Gebinde oder der verwendeten Greifeinrichtung erfolgen. Eine Bestimmung der Haltekraft und eine Regelung der Öffnungsgeschwindigkeit oder der Öffnungsbeschleunigung in Abhängigkeit von der bestimmten Haltekraft kann die Wahrscheinlichkeit der Ablösung des Gebindes von der Greifeinrichtung noch weiter minimieren; beispielsweise kann die bestimmte Haltekraft zwischen nacheinander gegriffenen Gebinden variieren, woraufhin die Öffnungsgeschwindigkeit oder die Öffnungsbeschleunigung ohne Benutzereingriff erhöht oder verringert werden kann, wodurch die Zuverlässigkeit und der Durchsatz vorteilhaft erhöht werden können.

Bevorzugt umfasst die Greifeinrichtung einen Haltekraftsensor zur Bestimmung der Haltekraft. Insbesondere ist der Haltekraftsensor als Drucksensor ausgebildet.

Die Ausbildung des Haltekraftsensors als Drucksensor hat den Vorteil, dass mittels des Drucksensors ein Abfall des Druckes in dem pneumatischen Greifmittel zuverlässig bestimmbar ist, wobei der Abfall des Druckes eine Verringerung der Haltekraft bedeutet.

Alternativ kann die Haltekraft selbstverständlich auch mittels eines Kraftsensors bestimmt werden; beispielsweise kann ein Kraftsensor an einem Greifer angeordnet werden, von dem das Gebinde eingeklemmt wird, wobei die Klemmkraft mittels des Kraftsensors bestimmbar ist.

Ein zusätzlicher Aspekt der vorliegenden Erfindung betrifft ein Verfahren zur Schüttgutabsackung in ein Gebinde. Dieses Verfahren wird insbesondere mit einer Vorrichtung wie vorstehend beschrieben durchgeführt. Das Verfahren umfasst den Schritt des Bereitstellens zumindest eines Gebindes, insbesondere eines vereinzelten Gebindes, in einer Bereitstellungseinrichtung. Mit anderen Worten wird insbesondere genau ein Gebinde in der Bereitstellungseinrichtung bereitgestellt, beispielsweise durch einen Bediener. Anschliessend erfolgt ein Greifen des Gebindes mittels einer Greifeinrichtung. In einem nächsten Schritt erfolgt ein Transportieren des Gebindes mittels einer Transporteinrichtung zu einer Absackeinrichtung. Weiter umfasst das Verfahren den Schritt des Öffnens des Gebindes mittels einer Gebindeöffnungseinrichtung vor der Absackung von Schüttgut in das Gebinde in der Absackeinrichtung.

Das Öffnen des Gebindes kann vor, während oder nach dem Transportieren des Gebindes erfolgen.

Vor dem Greifen des Gebindes erfolgt ein Detektieren der Position des Gebindes auf und/oder in der Bereitstellungseinrichtung mittels einer als Distanzmesseinrichtung ausgebildeten Detektionseinrichtung. Anschliessend an das Detektieren und insbesondere Greifen erfolgt ein Positionieren und insbesondere Ausrichten des Gebindes mittels einer Positioniereinrichtung in Abhängigkeit von einer durch die Detektionseinrichtung gemessenen Distanz.

Optional oder zusätzlich erfolgt das Öffnen des Gebindes mittels der Gebindeöffnungseinrichtung derart, dass zumindest ein Öffnungsparameter der Gebindeöffnungseinrichtung gesteuert und/oder geregelt wird. Insbesondere werden eine Öffnungszeit, eine Öffnungsgeschwindigkeit oder eine Öffnungsbeschleunigung oder beliebige Kombinationen aus den Öffnungsparametern gesteuert und/oder geregelt. Es wird zumindest einer der Schritte des Detektierens und Positionierens des Gebindes und des optionalen Schritts des Öffnens des Gebindes mittels Steuerung und/oder Regelung eines Öffnungsparameters durchgeführt. Optional können auch beide Schritte durchgeführt werden.

Dieses Verfahren weist die oben erläuterten Vorteile auf.

Bevorzugt wird eine Öffnungsbeschleunigung der Gebindeöffnungseinrichtung zur Öffnung des Gebindes in einem ersten Zeitabschnitt auf eine erste Öffnungsbeschleunigung kleiner als eine zweite Öffnungsbeschleunigung in einem zeitlich insbesondere direkt folgenden zweiten Zeitabschnitt gesteuert oder geregelt.

Insbesondere liegt die Öffnungsbeschleunigung im ersten Zeitabschnitt im Bereich von 0.3 m/s² bis 0.9 m/s² und im zweiten Zeitabschnitt im Bereich von 1.5 m/s² bis 2.5 m/s².

Bevorzugt wird die Öffnungsgeschwindigkeit oder die Öffnungsbeschleunigung der Gebindeöffnungseinrichtung in Abhängigkeit von der Haltekraft, mit der das Gebinde mittels der Greifeinrichtung gehalten wird, gesteuert und/oder geregelt. Die Haltekraft wird insbesondere bestimmt.

Ein Gebinde geeignet zur Verwendung in einer Vorrichtung wie oben beschrieben in einem Verfahren wie oben beschrieben könnte zumindest eine am und / oder im Gebinde angeordnete Markierung aufweisen, die zur Detektion der Position des Gebindes mittels eines Markierungsdetektors geeignet ist.

Die Markierung kann zumindest als eine optische Markierung, eine magnetische Markierung oder eine taktile Markierung oder beliebige Kombinationen daraus ausgebildet sein.

Eine optische Markierung kann als Muster auf dem Gebinde ausgebildet sein, welches mit einem optischen Sensor wie beispielsweise einer Kamera detektierbar ist. Das Muster ist bevorzugt als Fadenkreuz oder Punktemuster oder beliebigen Kombinationen daraus ausgebildet. Eine optische Markierung hat den Vorteil, dass die Position mit hoher Genauigkeit detektierbar ist.

Eine magnetische Markierung kann als lokale Magnetisierung ausgebildet sein, die mit einem üblichen Magnetdetektor detektierbar ist. Beispielsweise kann die magnetische Markierung durch Anordnung von zumindest einem und bevorzugt zumindest zwei Magneten auf und / oder in dem Gebinde ausgebildet sein, derart, dass die Positionierung detektierbar ist. Eine magnetische Markierung hat den Vorteil, dass die Detektierung der Position durch eine Verschmutzung üblicherweise kaum negativ beeinflusst wird.

Eine taktile Markierung kann als lokale Erhöhung und / oder Vertiefung, variierende Rauhigkeit oder beliebigen Kombinationen daraus ausgebildet sein, die mit einem Berührungssensor detektierbar sind. Dies hat den Vorteil, dass derartige Markierungen kostengünstig ausgebildet werden können.

Eine optische, magnetische oder taktile Markierung und der Markierungsdetektor sind vorteilhaft so ausgebildet, dass die Position des Gebindes detektierbar ist und diese Information zur Korrektur der Position des Gebindes mittels der Positioniereinrichtung verwendbar ist.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Schematische Darstellung einer erfindungsgemässen Vorrichtung für die Schüttgutabsackung in einer ersten Position in einer Draufsicht;
- Figur 2:: Schematische Darstellung der erfindungsgemässen Vorrichtung gemäss Figur 1 für die Schüttgutabsackung in einer zweiten Position in einer Draufsicht;
- Figur 3:: Schematische Darstellung der erfindungsgemässen Vorrichtung gemäss Figur 1 für die Schüttgutabsackung in einer geschlossenen Position in einer Seitenansicht;
- Figur 4:: Schematische Darstellung der erfindungsgemässen Vorrichtung gemäss Figur 1 für die Schüttgutabsackung in einer offenen Position in einer Seitenansicht;
- Figur 5:: Schematische Darstellung einer erfindungsgemässen Greifeinrichtung in einer Ansicht von unten;
- Figur 6:: Schematische Darstellung einer alternativen erfindungsgemässen Bereitstellungseinrichtung;
- Figur 7:: Schematische Darstellung einer erfindungsgemässen Vorrichtung mit Absackeinrichtung;
- Figur 8:: Schematische Darstellung eines erfindungsgemässen Gebindes mit einer als Fadenkreuz ausgebildeten Markierung;
- Figur 9:: Schematische Darstellung eines erfindungsgemässen Gebindes mit einer magnetischen Markierung;
- Figur 10:: Darstellung eines Bewegungsprofils der Gebindeöffnungseinrichtung während einer Gebindeöffnung.

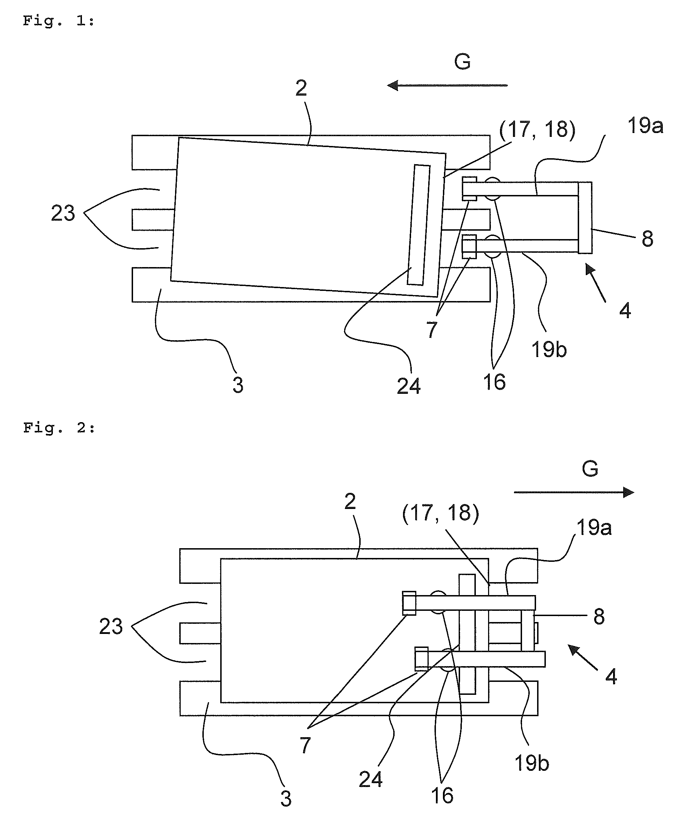

In Figur 1 ist in schematischer Darstellung eine erfindungsgemässe Vorrichtung für die Schüttgutabsackung in einer ersten Position in einer Draufsicht dargestellt.

Ein im Wesentlichen geschlossenes und leeres Gebinde 2, vorliegend ein Sack aus Papier, liegt auf einer Bereitstellungseinrichtung 3, auf welche das Gebinde 2 von einer nicht gezeigten Vereinzelungseinrichtung positioniert wurde, mit der das Gebinde 2 von einem Gebindestapel entnommen wurde. Das Gebinde 2 umfasst ein Verschlussmittel 24, welches als Klebestreifen ausgebildet ist. Nach dem Absacken von Schüttgut ist die Einfüllseite 17 mit der Einfüllöffnung 18 für das Schüttgut umklappbar zum Verschliessen des Gebindes 2.

Die Bereitstellungseinrichtung 3 umfasst zwei Ausnehmungen 23, in die eine Greifeinrichtung 4 eingreifen kann, um das Gebinde 2 zu greifen.

Die Greifeinrichtung 4 umfasst zwei Greifarme 19a und 19b sowie zwei weitere, hier nicht sichtbare, Greifarme zum Greifen des Gebindes. Die Greifarme umfassen jeweils Greifmittel 16, die als Saugnäpfe ausgebildet sind. Benachbart zu den Greifmitteln 16 sind jeweils Detektionseinrichtungen 7 zur Detektion der Position des Gebindes 2 auf der Bereitstellungseinrichtung 3 angeordnet. Die Detektionseinrichtungen 7 sind als Ultraschallsensoren, d. h. als Distanzmesseinrichtungen, ausgebildet. Die Greifeinrichtung 4 umfasst weiter eine Positioniereinrichtung 8, mit der die Greifarme relativ zueinander positionierbar sind zur Positionierung des Gebindes 2. Die Positioniereinrichtung 8 umfasst einen hier nicht sichtbaren, dem Fachmann bekannten pneumatischen Antrieb, der mit einer Steuer- und/oder Regeleinrichtung verbunden ist (nicht dargestellt), zur Positionierung der Greifarme relativ zueinander. Alternativ kann auch ein hydraulischer Antrieb vorgesehen werden.

Im Betrieb wird durch eine nicht gezeigte Vereinzelungseinrichtung das Gebinde 2 auf der Bereitstellungseinrichtung 3 positioniert. Anschliessend wird die Greifeinrichtung 4 entlang des Pfeils G bewegt, um das Gebinde 2 zu greifen. Mittels der Detektionseinrichtungen 7 ist die Position und Orientierung der Einfüllseite 17 des Gebindes 2 detektierbar. Die Detektion der Position erfolgt durch eine Änderung der mit den Ultraschallsensoren gemessenen Distanz, wenn die Greifeinrichtung 4 zum Greifen des Gebindes 2 in der Richtung G über die Einfüllseite 17 bewegt wird. Anhand des jeweiligen Zeitpunkts der gemessenen Änderung der Distanz an den zwei Greifarmen 19a und 19b kann die Ausrichtung des Gebindes 2 bestimmt werden.

Die hier nicht sichtbaren Greifmittel zum Greifen einer Auflageseite des Gebindes 2 werden in den Ausnehmungen 23 zwischen den Schienen der Bereitstellungseinrichtung 3 positioniert.

In Figur 2 ist in schematischer Darstellung die Vorrichtung gemäss Figur 1 in einer zweiten Position in einer Draufsicht dargestellt.

Gleiche Referenzzeichen bezeichnen gleiche Merkmale in allen Figuren und werden deshalb nur bei Bedarf erneut erläutert.

Nach dem Detektieren der Ausrichtung des Gebindes 2 und dem Positionieren der Greifeinrichtung 4 über einer Oberseite des Gebindes wird die Oberseite mittels der als Saugnäpfe ausgebildeten Greifmittel 16 gegriffen. Anschliessend wird mittels der bestimmten Ausrichtung des Gebindes 2 eine Positioniereinrichtung 8 derart betrieben, dass die Greifarme 19a und 19b relativ zueinander positioniert werden und das Gebinde 2 die gewünschte Ausrichtung erhält. Die Positioniereinrichtung 8 umfasst im Gegensatz zur Figur 1 einen hier nicht sichtbaren, dem Fachmann bekannten Elektroantrieb, der mit einer Steuer- und/oder Regeleinrichtung verbunden ist (nicht dargestellt).

Anschliessend an die Ausrichtung des Gebindes 2 erfolgt ein Transport des gegriffenen Gebindes 2 in einer Richtung entlang des Pfeils G.

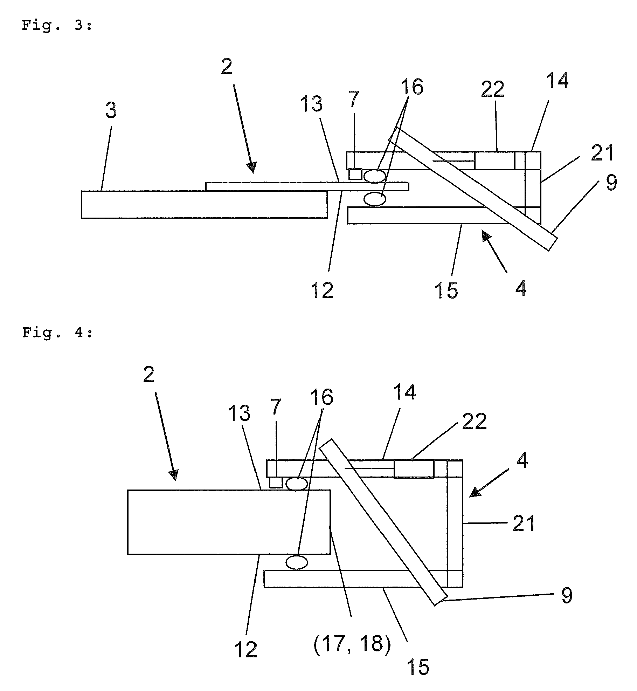

In Figur 3 ist in schematischer Darstellung die Vorrichtung gemäss Figur 1 in einer Seitenansicht in einer geschlossenen Position dargestellt. Im Unterschied zur Figur 1 sind die Detektionseinrichtungen 7 als Photosensoren ausgebildet. Das Gebinde 2 wird mittels einer ersten Greifarmeinrichtung 14 und einer zweiten Greifarmeinrichtung 15 auf der Auflageseite 12 und der Oberseite 13 gegriffen und positioniert. Das Gebinde 2 wurde teilweise von der Bereitstellungseinrichtung 3 transportiert. Die erste Greifarmeinrichtung 14 und die zweite Greifarmeinrichtung 15 umfassen jeweils zwei Greifarme wie in Figur 1 dargestellt.

Die Greifeinrichtung 4 gemäss Figur 3 umfasst eine Vorspanneinrichtung 21 zur Vorspannung der ersten Greifarmeinrichtung 14 und der zweiten Greifarmeinrichtung 15 zueinander. Die Vorspanneinrichtung 21 ist als pneumatische Vorspanneinrichtung ausgebildet. Zudem weist die Greifeinrichtung 4 einen Antrieb 22 auf, der als Elektroantrieb ausgebildet ist. Der Antrieb 22 ist so ausgestaltet, dass mittels einer Gebindeöffnungseinrichtung 9 die erste Greifarmeinrichtung 14 und die zweite Greifarmeinrichtung 15 relativ zueinander positionierbar sind zur Öffnung des Gebindes 2. Der Antrieb 22 ist mit der Gebindeöffnungseinrichtung 9 wirkverbunden, sodass die Gebindeöffnungseinrichtung 9 rotativ positionierbar ist.

Alternativ kann der Antrieb 22 mit der ersten Greifarmeinrichtung 14 und der zweiten Greifarmeinrichtung 15 direkt wirkverbunden sein ohne Gebindeöffnungseinrichtung 9, wobei die Positionierung der Greifarmeinrichtungen relativ zueinander mittels linearer Positionierung durch den Antrieb 22 erfolgt. In diesem Fall übernimmt der Antrieb 22 die Funktion der Gebindeöffnungseinrichtung 9.

In Figur 4 ist die Vorrichtung gemäss Figur 3 in einer offenen Position dargestellt. Im Unterschied zu Figur 3 ist die Detektionseinrichtung 7 als Kamera ausgebildet, wobei nur eine Kamera verwendet wird. Aus dem mit der Kamera aufgenommenen Bild wird die Position des Gebindes 2 auf der hier nicht dargestellten Bereitstellungseinrichtung bestimmt.

Für eine Öffnung des Gebindes wird der Antrieb 22 derart gesteuert, dass die Gebindeöffnungseinrichtung 9 rotativ positioniert wird, wodurch eine Öffnung erfolgt. Hierzu muss der Antrieb 22 die mittels der Vorspanneinrichtung 21 ausgeübte Kraft überwinden, wodurch Stösse im Wesentlichen verhindert werden, was die Wahrscheinlichkeit für die Ablösung des Gebindes 2 von der Greifeinrichtung 4 verringert.

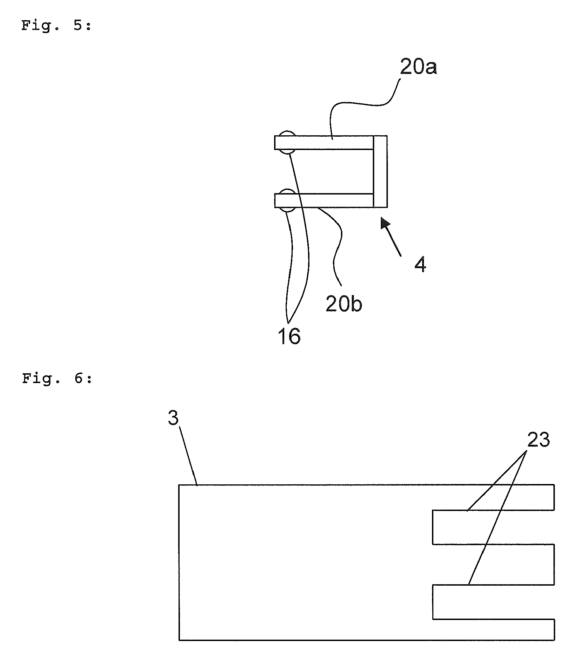

In Figur 5 ist eine Greifeinrichtung 4 gemäss Figur in einer Ansicht von unten dargestellt. Die Greifeinrichtung 4 weist zweite Greifarme 20a und 20b auf, an denen jeweils Greifmittel 16, die als Greifer ausgebildet sind, angeordnet sind.

In Figur 6 ist eine alternative Ausgestaltung der Bereitstellungseinrichtung 3 in einer Draufsicht dargestellt. Die Bereitstellungseinrichtung 3 weist zwei Ausnehmungen 23 auf, in die die Greifeinrichtung eingreifen kann zum Greifen der Auflageseite des Gebindes.

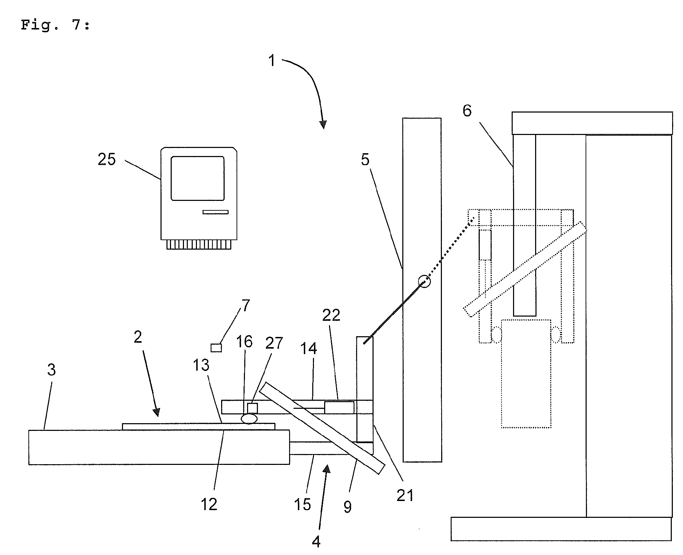

In Figur 7 ist in schematischer Darstellung eine erfindungsgemässe Vorrichtung 1 mit einer Absackeinrichtung 6 dargestellt.

Die Greifeinrichtung 4 ist in einer ersten Position dargestellt, in der das Gebinde 2 gegriffen und ausgerichtet ist und das Gebinde 2 auf der Bereitstellungseinrichtung 3 aufliegt. Die zweite Greifarmeinrichtung 15 greift in die hier nicht sichtbare Ausnehmung der Bereitstellungseinrichtung 3 ein.

Mittels einer Transporteinrichtung 5, die mit der Greifeinrichtung 4 verbunden ist, ist die Greifeinrichtung 4 mit dem Gebinde 2 in der Absackeinrichtung 6 positionierbar, was durch die gestrichelte Darstellung angedeutet ist. In der gestrichelten Darstellung befindet sich die Greifeinrichtung 4 in einer offenen Position, sodass Schüttgut in das Gebinde 2 absackbar ist.

Die Vorspanneinrichtung 21 spannt die erste Greifarmeinrichtung 14 und die zweite Greifarmeinrichtung 15 gegeneinander vor. Der Antrieb 22 ist mit einem positionierbaren Anschlag (nicht dargestellt) wirkverbunden. Der Anschlag ist so ausgebildet, dass die rotative Positionierung der Gebindeöffnungseinrichtung 9 blockierbar ist. Somit bewegen sich die erste Greifarmeinrichtung 14 und die zweite Greifarmeinrichtung 15 nicht gegeneinander trotz Vorspannung mittels der Vorspanneinrichtung 21. Durch Positionieren des Anschlags mittels des Antriebs kann eine Öffnung der ersten Greifarmeinrichtung 14 und der zweiten Greifarmeinrichtung 15 gegeneinander gesteuert und/oder geregelt werden.

Zur Steuerung und/oder Regelung umfasst die Vorrichtung 1 eine Steuer- und/oder Regeleinrichtung 25, die als Computer ausgebildet ist. Die Steuer- und/oder Regeleinrichtung 25 ist mit den zu steuernden und/oder regelnden Einrichtungen wirkverbunden. Im vorliegenden Fall ist diese Wirkverbindung drahtlos ausgebildet. Alternativ kann die Steuer- und/oder Regeleinrichtung 25 mittels kabelgebundener Datenleitung oder anderen, dem Fachmann bekannten Mitteln mit den zu steuernden und/oder regelnden Einrichtungen wirkverbunden sein.

Eine Detektionseinrichtung 7 ist als Kamera ausgebildet, die nicht mit der Greifeinrichtung 4 verbunden ist. Eine als Fadenkreuz ausgebildete Markierung ist auf dem Gebinde hier nicht sichtbar angeordnet. Vor dem Greifen des Gebindes 2 wird die Ausrichtung des Fadenkreuzes mittels der Kamera bestimmt. Diese bestimmte Ausrichtung wird verwendet zur Korrektur der Position des Gebindes 2 mittels der hier nicht sichtbaren Positioniereinrichtung.

Die Greifeinrichtung 4 weist einen Drucksensor 27 auf zur Messung des Drucks in den Greifmitteln 16, die als Saugnäpfe ausgebildet sind. Aus dem gemessenen Druck kann die Haltekraft bestimmt werden und eine Öffnungsgeschwindigkeit oder eine Öffnungsbeschleunigung gesteuert und/oder geregelt werden.

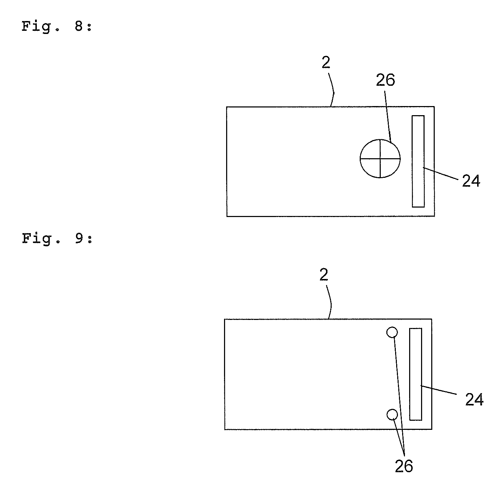

In Figur 8 ist ein Gebinde 2 mit einer als Fadenkreuz ausgebildeten Markierung 26 dargestellt, wie dieses in der Vorrichtung gemäss Figur 7 verwendet wird.

In Figur 9 ist ein Gebinde 2 mit als zwei Magnete ausgebildeten Markierungen 26 dargestellt. Anhand der mit einem Magnetfelddetektor gemessenen Magnetfeldstärke kann die Ausrichtung des Gebindes 2 bestimmt und korrigiert werden.

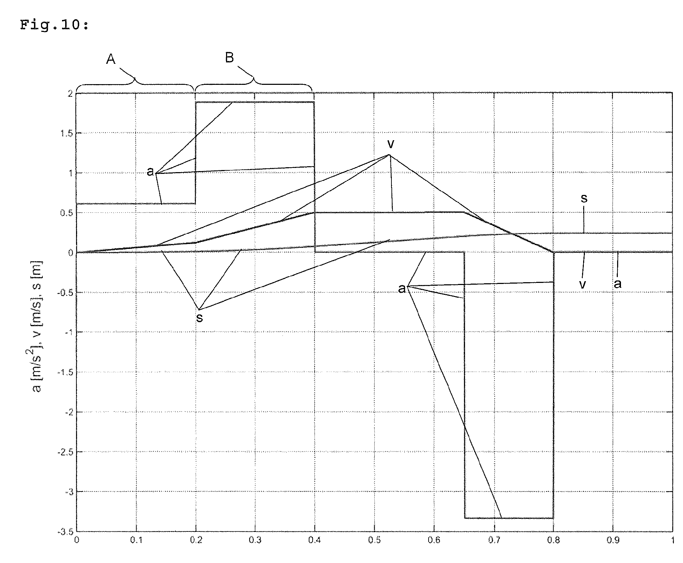

In Figur 10 ist ein Bewegungsprofil einer Gebindeöffnung einer Gebindeöffnungseinrichtung dargestellt. Die Öffnungsbeschleunigung ist mit a gekennzeichnet, die Öffnungsgeschwindigkeit mit v und der Öffnungsweg mit s.

Zum Zeitpunkt t=0s ist die Gebindeöffnungseinrichtung geschlossen (a=0 m/s², v=0 m/s, s=0 m). Anschliessend wird die Gebindeöffnungseinrichtung in einem ersten Zeitabschnitt A auf eine erste Öffnungsbeschleunigung a=0.6 m/s² gesteuert. In einem zeitlich direkt folgenden zweiten Zeitabschnitt B wird die Gebindeöffnungseinrichtung auf eine zweite Öffnungsbeschleunigung a=1.9 m/s² gesteuert. Anschliessend wird für ca. 0.25 s die Öffnunasaeschwindigkeit v konstant gehalten bei 0.5 m/s. Anschliessend erfolgt eine Abbremsung, wobei bei ca. t=0.8 s die Öffnungsbewegung nach einem zurückgelegten Öffnungsweg s = 0.25 m beendet ist. Ab ca. t=0.8 s beträgt die Öffnungsgeschwindigkeit v=0 m/s und die Öffnungsbeschleunigung a=0 m/s².

## Patentansprüche

1. Vorrichtung (1) für die Schüttgutabsackung in ein Gebinde (2) mit einer in einer Einfüllseite (17) angeordneten Einfüllöffnung (18), umfassend eine Bereitstellungseinrichtung (3) für das Gebinde (2), eine Greifeinrichtung (4) zum Greifen des im Wesentlichen geschlossenen und leeren Gebindes (2) von der Bereitstellungseinrichtung (3), **dadurch gekennzeichnet, dass** die Vorrichtung (1) eine als Distanzmesseinrichtung ausgebildete Detektionseinrichtung (7) zur Detektion der Position des Gebindes (2) auf und/oder in der Bereitstellungseinrichtung (3) aufweist und eine Positioniereinrichtung (8) zur Positionierung, insbesondere einer Ausrichtung, des Gebindes (2) in Abhängigkeit von einer durch die Detektionseinrichtung gemessenen Distanz.

2. Vorrichtung (1) nach Anspruch 1, **dadurch gekennzeichnet, dass** die Greifeinrichtung (4) eine erste Greifarmeinrichtung (14) zum Greifen der Oberseite (13) und/oder eine zweite Greifarmeinrichtung (15) zum Greifen der Auflageseite (12) aufweist.

3. Vorrichtung (1) nach Anspruch 2 mit erster Greifarmeinrichtung (14) und zweiter Greifarmeinrichtung (15), **dadurch gekennzeichnet, dass** mit der Detektionseinrichtung (7) eine Distanzmessung zwischen der ersten Greifarmeinrichtung (14) und der zweiten Greifarmeinrichtung (15) durchführbar ist.

4. Vorrichtung (1) nach Anspruch 2 oder 3, **dadurch gekennzeichnet, dass** die Detektionseinrichtung (7) an dem dem Gebinde (2) zugewandten Bereich der ersten Greifarmeinrichtung (14) und/oder der zweiten Greifarmeinrichtung (15) angeordnet ist, insbesondere benachbart zu zumindest einem Greifmittel (16).

5. Vorrichtung (1) nach einem der Ansprüche 1 bis 4, **dadurch gekennzeichnet, dass** die Greifeinrichtung (4) derart ausgebildet ist, dass die Einfüllseite (17) des Gebindes (2) mittels der Positioniereinrichtung (8) in eine definierte Ausrichtung bewegbar ist, insbesondere derart, dass nach einem Transport des Gebindes (2) mittels einer Transporteinrichtung (5) zu der Absackeinrichtung (6) und einer Öffnung des Gebindes (2) mittels einer Gebindeöffnungseinrichtung (9) die Schnittebene durch die Einfüllöffnung (18) im Wesentlichen senkrecht zu einer mittleren Förderrichtung des Schüttguts in das Gebinde (2) angeordnet ist.

6. Vorrichtung (1) nach einem der Ansprüche 1 bis 5, **dadurch gekennzeichnet, dass** die Ausrichtung des Gebindes (2) auf und/oder in der Bereitstellungseinrichtung (3) mittels der Greifeinrichtung (4) vor einem Transport des Gebindes (2) mittels einer Transporteinrichtung (5) durchführbar ist.

7. Vorrichtung (1) nach einem der Ansprüche 2 bis 6, **dadurch gekennzeichnet, dass** die erste Greifarmeinrichtung (14) zumindest zwei erste Greifarme (19a, 19b) umfasst und/oder die zweite Greifarmeinrichtung (15) zumindest zwei zweite Greifarme (20a, 20b), wobei die zwei ersten Greifarme (19a, 19b) und/oder die zwei zweiten Greifarme (20a, 20b) relativ zueinander, insbesondere im Wesentlichen parallel, positionierbar sind zur Ausrichtung des Gebindes (2).

8. Vorrichtung (1) nach Anspruch 7 mit einer ersten Greifarmeinrichtung (14) und einer zweiten Greifarmeinrichtung (15), **dadurch gekennzeichnet, dass** die zwei ersten Greifarme (19a, 19b) und die zwei zweiten Greifarme (20a, 20b) im Wesentlichen zeitgleich miteinander positionierbar sind.

9. Vorrichtung (1) nach einem der Ansprüche 5 bis 8, wobei die Greifeinrichtung (4) einen Haltekraftsensor, insbesondere einen Drucksensor (27), umfasst zur Bestimmung einer Haltekraft, mit der das Gebinde (2) mittels der Greifeinrichtung (4) gehalten wird, wobei zumindest ein Öffnungsparameter der Gebindeöffnungseinrichtung (9) zur Öffnung des Gebindes (2) in Abhängigkeit von der Haltekraft steuerbar und/oder regelbar ist.

10. Vorrichtung (1) nach Anspruch 9 mit erster Greifarmeinrichtung (14) und zweiter Greifarmeinrichtung (15), **dadurch gekennzeichnet, dass** die erste Greifarmeinrichtung (14) und die zweite Greifarmeinrichtung (15) mittels der Gebindeöffnungseinrichtung (9) relativ zueinander positionierbar sind zur Öffnung des Gebindes (2), und
dass die Gebindeöffnungseinrichtung (9) eine Vorspanneinrichtung (21) zur Vorspannung der ersten Greifarmeinrichtung (14) und der zweiten Greifarmeinrichtung (15) zueinander und/oder gegeneinander aufweist, und einen Antrieb (22) zur Öffnung des Gebindes (2).

11. Vorrichtung (1) nach einem der Ansprüche 5 bis 10, **dadurch gekennzeichnet, dass** die Vorrichtung (1) eine Steuer- und/oder Regeleinrichtung (25) umfasst, die eine Öffnungsbeschleunigung derart steuert und/oder regelt, dass zur Öffnung des Gebindes (2) die Öffnungsbeschleunigung in einem ersten Zeitabschnitt (A) der Öffnungsbewegung auf eine erste Öffnungsbeschleunigung kleiner als eine zweite Öffnungsbeschleunigung in einem zeitlich insbesondere direkt folgenden zweiten Zeitabschnitt (B) der Öffnungsbewegung einstellbar ist.

12. Vorrichtung (1) nach einem der Ansprüche 9 bis 11, **dadurch gekennzeichnet, dass** die Öffnungsgeschwindigkeit oder die Öffnungsbeschleunigung der Gebindeöffnungseinrichtung (9) in Abhängigkeit von der Haltekraft steuerbar und/oder regelbar ist.

13. Verfahren zur Schüttgutabsackung in ein Gebinde (2), umfassend die folgenden Schritte:
- Bereitstellen des insbesondere vereinzelten Gebindes (2) in einer Bereitstellungseinrichtung (3);
- Greifen des Gebindes (2) mittels einer Greifeinrichtung (4);
- Transportieren des Gebindes (2) mittels einer Transporteinrichtung (5) zu einer Absackeinrichtung (6) ;
- Öffnen des Gebindes (2) mittels einer Gebindeöffnungseinrichtung (9) in der Absackeinrichtung (6) vor der Absackung von Schüttgut;
**gekennzeichnet durch** Detektieren der Position des Gebindes (2) auf und/oder in der Bereitstellungseinrichtung (3) mittels einer als Distanzmesseinrichtung ausgebildeten Detektionseinrichtung (7) und Positionieren, insbesondere Ausrichten des Gebindes (2) mittels einer Positioniereinrichtung in Abhängigkeit von einer **durch** die Detektionseinrichtung (7) gemessene Distanz.

14. Verfahren nach Anspruch 13,
**gekennzeichnet durch** Öffnen des Gebindes (2) vor der Absackung von Schüttgut mittels einer Gebindeöffnungseinrichtung (9) in der Absackeinrichtung (6), wobei eine Öffnungsbeschleunigung der Gebindeöffnungseinrichtung (9) zur Öffnung des Gebindes (2) in einem ersten Zeitabschnitt (A) auf eine erste Öffnungsbeschleunigung kleiner als eine zweite Öffnungsbeschleunigung in einem zeitlich insbesondere direkt folgenden zweiten Zeitabschnitt (B) gesteuert oder geregelt wird.

15. Verfahren nach Anspruch 13 oder 14,
**gekennzeichnet durch** Öffnen des Gebindes (2) vor der Absackung von Schüttgut mittels einer Gebindeöffnungseinrichtung (9) in der Absackeinrichtung (6), wobei die Öffnungsgeschwindigkeit oder die Öffnungsbeschleunigung der Gebindeöffnungseinrichtung (9) in Abhängigkeit von einer Haltekraft, mit der das Gebinde (2) mittels der Greifeinrichtung (4) gehalten wird, gesteuert und/oder geregelt wird.

## Claims

1. Apparatus (1) for packing bulk material into a container (2) having a fill opening (18) disposed in a fill side (17), comprising a supply device (3) for the container (2), a gripping device (4) for grabbing the substantially closed and empty container (2) from the supply device (3), **characterized in that** the apparatus (1) has a detection device (7) configured as a distance measuring device for detecting the position of the container (2) on and/or in the supply device (3), and a positioning device (8) for positioning, in particular aligning, the container (2) as a function of a distance measured by the detection device.

2. Apparatus (1) according to Claim 1, **characterized in that** the gripping device (4) has a first gripper arm device (14) for gripping the top side (13) and/or a second gripper arm device (15) for gripping the supporting side (12).

3. Apparatus (1) according to Claim 2 having a first gripper arm device (14) and a second gripper arm device (15), **characterized in that** using the detection device (7) a distance measurement can be conducted between the first gripper arm device (14) and the second gripper arm device (15).

4. Apparatus (1) according to Claim 2 or 3, **characterized in that** the detection device (7) is disposed on that region of the first gripper arm device (14) and/or of the second gripper arm device (15) which is facing toward the container (2), in particular adjacent to at least one gripping means (16).

5. Apparatus (1) according to one of Claims 1 to 4, **characterized in that** the gripping device (4) is configured such that the fill side (17) of the container (2) is movable by means of the positioning device (8) into a defined alignment, in particular such that, after a transport of the container (2) to the bagging device (6) by means of a transport device (5) and an opening of the container (2) by means of a container opening device (9), the sectional plane through the fill opening (18) is disposed substantially perpendicular to a middle direction of feed of the bulk material into the container (2).

6. Apparatus (1) according to one of Claims 1 to 5, **characterized in that** the alignment of the container (2) on and/or in the supply device (3) can be performed by means of the gripping device (4) prior to a transport of the container (2) by means of a transport device (5).

7. Apparatus (1) according to one of Claims 2 to 6, **characterized in that** the first gripper arm device (14) comprises at least two first gripper arms (19a, 19b) and/or the second gripper arm device (15) comprises at least two second gripper arms (20a, 20b), wherein the two first gripper arms (19a, 19b) and/or the two second gripper arms (20a, 20b) are positionable relative to one another, in particular substantially parallel to one another, for the alignment of the container (2).

8. Apparatus (1) according to Claim 7 having a first gripper arm device (14) and a second gripper arm device (15), **characterized in that** the two first gripper arms (19a, 19b) and the two second gripper arms (20a, 20b) are positionable substantially simultaneously with one another.

9. Apparatus (1) according to one of Claims 5 to 8, wherein the gripping device (4) comprises a holding force sensor, in particular a pressure sensor (27), for determining a holding force, with which the container (2) is held by means of the gripping device (4), wherein at least one opening parameter of the container opening device (9) for opening the container (2) is/are controllable and/or regulatable as a function of the holding force.

10. Apparatus (1) according to Claim 9 having a first gripper arm device (14) and a second gripper arm device (15), **characterized in that** the first gripper arm device (14) and the second gripper arm device (15) are positionable relative to each other, by means of the container opening device (9), for opening of the container (2), and **in that** the container opening device (9) has a pretensioning device (21) for pretensioning the first gripper arm device (14) and the second gripper arm device (15) toward each other and/or against each other, and a drive (22) for opening of the container (2).

11. Apparatus (1) according to one of Claims 5 to 10, **characterized in that** the apparatus (1) comprises a control and/or regulating device (25) which controls and/or regulates an opening acceleration such that, for opening of the container (2), the opening acceleration in a first time phase (A) of the opening motion is adjustable to a first opening acceleration smaller than a second opening acceleration in a chronologically (in particular directly) following second time phase (B) of the opening motion.

12. Apparatus (1) according to one of Claims 9 to 11, **characterized in that** the opening speed or the opening acceleration of the container opening device (9) is controllable and/or regulatable as a function of the holding force.

13. Method for packing bulk material into a container (2), comprising the following steps:
- supply of the, in particular, separated container (2) in a supply device (3);
- gripping of the container (2) by means of a gripping device (4);
- transportation of the container (2) to a bagging device (6) by means of a transport device (5);
- opening of the container (2) by means of a container opening device (9) in the bagging device (6) prior to the packing of bulk material;
**characterized by** detection of the position of the container (2) on and/or in the supply device (3) by means of a detection device (7) configured as a distance measuring device, and positioning, in particular alignment of the container (2) by means of a positioning device as a function of a distance measured by the detection device (7).

14. Method according to Claim 13, **characterized by** opening of the container (2) prior to the packing of bulk material by means of a container opening device (9) in the bagging device (6), wherein an opening acceleration of the container opening device (9) for opening the container (2) in a first time phase (A) is controlled or regulated to a first opening acceleration smaller than a second opening acceleration in a chronologically (in particular directly) following second time phase (B).

15. Method according to Claim 13 or 14, **characterized by** opening of the container (2) prior to the packing of bulk material by means of a container opening device (9) in the bagging device (6), wherein the opening speed or the opening acceleration of the container opening device (9) is controlled and/or regulated as a function of a holding force with which the container (2) is held by means of the gripping device (4).

## Revendications

1. Dispositif (1) de mise en sac de produit en vrac dans un récipient (2) muni d'une ouverture de remplissage (18) disposée dans un côté de remplissage (17), comprenant un appareil de mise à disposition (3) pour le récipient (2), un appareil de préhension (4) destiné à saisir le récipient (2), essentiellement fermé et vide, de l'appareil de mise à disposition (3), **caractérisé en ce que** le dispositif (1) possède un appareil de détection (7) réalisé sous la forme d'un appareil de mesure de distance destiné à la détection de la position du récipient (2) sur et/ou dans l'appareil de mise à disposition (3) et un appareil de positionnement (8) destiné au positionnement, notamment d'une orientation, du récipient (2) en fonction d'une distance mesurée par l'appareil de détection.

2. Dispositif (1) selon la revendication 1, **caractérisé en ce que** l'appareil de préhension (4) possède un premier appareil à bras de préhension (14) destiné à saisir le côté supérieur (13) et/ou un deuxième appareil à bras de préhension (15) destiné à saisir le côté de dépose (12).

3. Dispositif (1) selon la revendication 2 comprenant un premier appareil à bras de préhension (14) et un deuxième appareil à bras de préhension (15), **caractérisé en ce qu'**une mesure de distance entre le premier appareil à bras de préhension (14) et le deuxième appareil à bras de préhension (15) peut être réalisée avec l'appareil de détection (7).

4. Dispositif (1) selon la revendication 2 ou 3, **caractérisé en ce que** l'appareil de détection (7) est disposé sur la zone du premier appareil à bras de préhension (14) et/ou du deuxième appareil à bras de préhension (15) faisant face au récipient (2), notamment adjacent à au moins un moyen de préhension (16).

5. Dispositif (1) selon l'une des revendications 1 à 4, **caractérisé en ce que** l'appareil de préhension (4) est configuré de telle sorte que le côté de remplissage (17) du récipient (2) peut être déplacé dans une orientation définie au moyen de l'appareil de positionnement (8), notamment de telle sorte qu'après un transport du récipient (2) au moyen d'un appareil de transport (5) jusqu'à l'appareil de mise en sac (6) et une ouverture du récipient (2) au moyen d'un appareil d'ouverture de récipient (9), le plan de coupe à travers l'ouverture de remplissage (18) est disposé essentiellement perpendiculairement à un sens de convoyage moyenne du produit en vrac dans le récipient (2).

6. Dispositif (1) selon l'une des revendications 1 à 5, **caractérisé en ce que** l'orientation du récipient (2) sur et/ou dans l'appareil de mise à disposition (3) au moyen de l'appareil de préhension (4) peut être effectuée avant un transport du récipient (2) au moyen d'un appareil de transport (5).

7. Dispositif (1) selon l'une des revendications 2 à 6, **caractérisé en ce que** le premier appareil à bras de préhension (14) comprend au moins deux premiers bras de préhension (19a, 19b) et/ou le deuxième appareil à bras de préhension (15) au moins deux deuxièmes bras de préhension (20a, 20b), les deux premiers bras de préhension (19a, 19b) et/ou les deux deuxièmes bras de préhension (20a, 20b) pouvant être positionnés les uns par rapport aux autres, notamment essentiellement en parallèle, en vue de l'orientation du récipient (2).

8. Dispositif (1) selon la revendication 7 comprenant un premier appareil à bras de préhension (14) et un deuxième appareil à bras de préhension (15), **caractérisé en ce que** les deux premiers bras de préhension (19a, 19b) et les deux deuxièmes bras de préhension (20a, 20b) peuvent être positionnés essentiellement simultanément les uns avec les autres.

9. Dispositif (1) selon l'une des revendications 5 à 8, l'appareil de préhension (4) comprenant un capteur de force de maintien, notamment un capteur de pression (27), destiné à déterminer une force de maintien avec laquelle le récipient (2) est maintenu au moyen de l'appareil de préhension (4), au moins un paramètre d'ouverture de l'appareil d'ouverture de récipient (9) pouvant être commandé et/ou régulé pour l'ouverture du récipient (2) en fonction de la force de maintien.

10. Dispositif (1) selon la revendication 9 comprenant un premier appareil à bras de préhension (14) et un deuxième appareil à bras de préhension (15), **caractérisé en ce que** le premier appareil à bras de préhension (14) et le deuxième appareil à bras de préhension (15) peuvent être positionnés l'un par rapport à l'autre au moyen de l'appareil d'ouverture de récipient (9) en vue d'ouvrir le récipient (2), et
**en ce que** l'appareil d'ouverture de récipient (9) possède un appareil de précontrainte (21) destiné à précontraindre le premier appareil à bras de préhension (14) et le deuxième appareil à bras de préhension (15) l'un par rapport à l'autre et/ou l'un contre l'autre, et un mécanisme d'entraînement (22) destiné à ouvrir le récipient (2).

11. Dispositif (1) selon l'une des revendications 5 à 10, **caractérisé en ce que** le dispositif (1) comprend un appareil de commande et/ou de régulation (25) qui commande et/ou régule une accélération d'ouverture de telle sorte que pour l'ouverture du récipient (2), l'accélération d'ouverture peut être réglée dans un premier intervalle de temps (A) du mouvement d'ouverture à une première accélération d'ouverture inférieure à une deuxième accélération d'ouverture dans un deuxième intervalle de temps (B) du mouvement d'ouverture suivant dans le temps, notamment directement.

12. Dispositif (1) selon l'une des revendications 9 à 11, **caractérisé en ce que** la vitesse d'ouverture ou l'accélération d'ouverture de l'appareil d'ouverture de récipient (9) peut être commandée et/ou régulée en fonction de la force de maintien.

13. Procédé de mise en sac de produit en vrac dans un récipient (2), comprenant les étapes suivantes :
- mise à disposition du récipient (2), notamment déparié, dans un appareil de mise à disposition (3) ;
- saisie du récipient (2) au moyen d'un appareil de préhension (4) ;
- transport du récipient (2) au moyen d'un appareil de transport (5) jusqu'à un appareil de mise en sac (6) ;
- ouverture du récipient (2) au moyen d'un appareil d'ouverture de récipient (9) dans l'appareil de mise en sac (6) avant la mise en sac de produit en vrac ;
**caractérisé par** la détection de la position du récipient (2) sur et/ou dans l'appareil de mise à disposition (3) au moyen d'un appareil de détection (7) réalisé sous la forme d'un appareil de mesure de distance et positionnement, notamment orientation du récipient (2) au moyen d'un appareil de positionnement en fonction d'une distance mesurée par l'appareil de détection (7).

14. Procédé selon la revendication 13, **caractérisé par** l'ouverture du récipient (2) avant la mise en sac du produit en vrac au moyen d'un appareil d'ouverture de récipient (9) dans l'appareil de mise en sac (6), une accélération d'ouverture de l'appareil d'ouverture de récipient (9) en vue de l'ouverture du récipient (2) dans un premier intervalle de temps (A) étant commandée ou régulée à une première accélération d'ouverture inférieure à une deuxième accélération d'ouverture dans un deuxième intervalle de temps (B) suivant dans le temps, notamment directement.

15. Procédé selon la revendication 13 ou 14, **caractérisé par** l'ouverture du récipient (2) avant la mise en sac de produit en vrac au moyen d'un appareil d'ouverture de récipient (9) dans l'appareil de mise en sac (6), la vitesse d'ouverture ou l'accélération de l'ouverture de l'appareil d'ouverture de récipient (9) étant commandée et/ou régulée en fonction d'une force de maintien avec laquelle le récipient (2) est maintenu au moyen de l'appareil de préhension (4).
